# EUROPÄISCHE PATENTANMELDUNG

(11) **EP 2 854 116 A2**
(43) Veröffentlichungstag der Anmeldung: **01.04.2015**
(21) Anmeldenummer: 13004863.0
(22) Anmeldetag: 09.10.2013
(51) Int. Cl.: G08G 1/095, G08G 1/056, G08G 1/042, G01S 13/91, G08G 1/16

(54) **Warnschild-Vorrichtung für Falschfahrer**

(30) Priorität: 27.09.2013 DE 102013110762
(71) Anmelder: Fietkau, Jürgen, 89075 Ulm (DE); Borst, Matthias, 89075 Ulm (DE)
(72) Erfinder: Fietkau, Jürgen, 89075 Ulm (DE); Borst, Matthias, 89075 Ulm (DE)
(74) Vertreter: Kiessling, Christian

(57) **Zusammenfassung**

Bei einer Warnschild-Vorrichtung (100) mit einem Basispaneel (110), dessen Oberfläche zur Aufnahme einer grafischen Gestaltung gemäß einer genormten Vorgabe der STVO dimensioniert ist, wobei im Bereich zumindest eines Teils der grafischen Gestaltung der Oberfläche des Basispaneels (110) Leuchtelemente (120) vorgesehen sind, und in dessen Innerem eine Steuereinheit zum Steuern sowohl eines Einschaltvorgangs als auch eines Ausschaltvorgangs der mit einer Stromquelle zeitweise elektrisch verbindbaren Leuchtelemente (120) untergebracht ist, wird ein Fahrer eines Kraftfahrzeuges bei Falschfahrt auf einer Fahrbahn entgegen einer vorgeschriebenen Richtung dadurch auf unübersehbare Weise gewarnt, dass eine mit der Steuereinheit gekoppelte Sensor-Einrichtung zum Detektieren eines sich der Sensor-Einrichtung auf einer Fahrbahn nähernden Kraftfahrzeuges vorgesehen ist, die bei Detektieren eines sich der Sensor-Einrichtung nähernden Kraftfahrzeuges ein Aktivierungssignal an die Steuereinheit sendet, um einen Einschaltvorgang der Leuchtelemente auszulösen.

## Beschreibung

Die Erfindung betrifft eine Warnschild-Vorrichtung mit einem Basispaneel, dessen Oberfläche zur Aufnahme einer grafischen Gestaltung gemäß einer genormten Vorgabe der STVO dimensioniert ist, wobei im Bereich zumindest eines Teils der grafischen Gestaltung der Oberfläche des Basispaneels Leuchtelemente vorgesehen sind, und in dessen Inneren eine Steuereinheit zum Steuern sowohl eines Einschaltvorgangs als auch eines Ausschaltvorgangs der mit einer Stromquelle zeitweise elektrisch verbindbaren Leuchtelemente untergebracht ist.

Warnschild-Vorrichtungen der eingangs genannten Art und dabei insbesondere solche zum Aufzeigen eines Einfahrt-Verbotes oder einfache Stopp-Schilder sind im Stand der Technik seit langem bekannt und werden zur Regulierung des Verkehrs von Fahrzeugen auf öffentlichen Straßen verwendet. Die herkömmlichen Warnschilder zum Aufzeigen eines Einfahrt-Verbotes weisen indes den Nachteil auf, dass sie sich in ihrer insgesamten Aufmachung von anderen Verkehrsschildern nur wenig unterscheiden und deshalb seitens unachtsamer Fahrer mitunter übersehen werden.

Gerade im Falle von Warnschildern zum Aufzeigen eines Einfahrt-Verbotes führt dies nicht sehr häufig aber dennoch immer wieder dazu, dass Fahrer eines Kraftfahrzeuges ein entsprechendes Warnschild übersehen und dadurch zu Falschfahrern werden, die eine Fahrbahn entgegen einer vorgeschriebenen Richtung befahren.

Im Falle von vor Auffahrtsstraßen zu Autobahnen platzierten Warnschildern führt dies zum Phänomen der so genannten Falschfahrer, umgangssprachlich auch als Geisterfahrer bezeichnet.

Aufgabe der Erfindung ist es deshalb, eine vor Auffahrtsstraßen zu Autobahnen zu platzierende Warnschild-Vorrichtung für Falschfahrer zu schaffen, deren generelle Erkennbarkeit gegenüber den bekannten Verkehrsschild-Vorrichtungen deutlich verbessert ist, und die eine Fahrt eines Kraftfahrzeuges entgegen einer vorgeschriebenen Richtung aktiv erkennt und bei Detektion einer Falschfahrt ein unübersehbares optisches Signal aussendet.

Für eine Warnschild-Vorrichtung der eingangs genannten Art wird diese Aufgabe erfindungsgemäß dadurch gelöst, dass eine mit der Steuereinheit gekoppelte Sensor-Einrichtung zum Detektieren eines sich der Sensor-Einrichtung auf einer Fahrbahn nähernden Kraftfahrzeuges vorgesehen ist, die bei Detektieren eines sich der Sensor-Einrichtung nähernden Kraftfahrzeuges ein Aktivierungssignal an die Steuereinheit sendet, um einen Einschaltvorgang der Leuchtelemente auszulösen.

Bevorzugte Ausführungsformen der Erfindung sind Gegenstand der Unteransprüche.

Bei der erfindungsgemäßen Warnschild-Vorrichtung wird durch die Merkmalskombination, dass eine mit der Steuereinheit gekoppelte Sensor-Einrichtung zum Detektieren eines sich der Sensor-Einrichtung auf einer Fahrbahn nähernden Kraftfahrzeuges vorgesehen ist, die bei Detektieren eines sich der Sensor-Einrichtung nähernden Kraftfahrzeuges ein Aktivierungssignal an die Steuereinheit sendet, um einen Einschaltvorgang der Leuchtelemente auszulösen, erreicht, dass ein Fahrer eines Kraftfahrzeuges bei Falschfahrt auf einer Fahrbahn entgegen einer vorgeschriebenen Richtung durch die optische Wirkung der sehr hell strahlenden Leuchtelemente, insbesondere bei einer Ausführung als LED, auf unübersehbare Weise gewarnt wird, wobei durch das mittels des Aktivierungssignals erwirkte plötzliche Aufleuchten der vorher inaktiven Leuchtelemente eine besondere Aufmerksamkeit erzielt wird.

Gemäß einer ersten bevorzugten Ausführungsform der erfindungsgemäßen Warnschild-Vorrichtung ist vorgesehen, dass die Sensor-Einrichtung einen in Richtung der Fahrbahn ausgerichteten Sender elektromagnetischer Wellen im Frequenzbereich von Metall reflektierenden Radar-Strahlen sowie einen Empfänger für von einem Kraftfahrzeug reflektierte Strahlung enthält, wobei ein Empfang charakteristischer reflektierter Strahlung die Detektion eines sich der Sensor-Einrichtung nähernden Kraftfahrzeuges signalisiert und ein Aktivierungssignal der Steuereinheit auslöst.

Gemäß einer alternativen Ausführungsform enthält die Sensor-Einrichtung zwei unterhalb der Oberfläche der Fahrbahn angeordnete Induktionsschleifen, wobei jede Schleife bei Überfahrt eines Kraftfahrzeuges einen elektrischen Impuls abgibt und zwei durch jeweils eine Schleife ausgelöste, in vorherbestimmter Reihenfolge auftretende Impulse die Detektion eines sich der Sensor-Einrichtung nähernden Kraftfahrzeuges signalisieren und ein Aktivierungssignal der Steuereinheit auslösen.

Gemäß einer weiteren bevorzugten Ausführungsform der erfindungsgemäßen Warnschild-Vorrichtung ist vorgesehen, dass die Leuchtelemente von Leuchtdioden gebildet sind.

Gemäß einer anderen bevorzugten Ausführungsform der erfindungsgemäßen Warnschild-Vorrichtung ist vorgesehen, dass die Leuchtelemente Licht mit einer Farbe aussenden, die im Wesentlichen der Farbgebung der betreffenden Bereiche der grafischen Gestaltung der Oberfläche des Basispaneels entspricht, wobei diese Gestaltung in Form und Farbe als Einfahrt-Verbotsschild ausgelegt ist.

Gemäß einer weiteren bevorzugten Ausführungsform der erfindungsgemäßen Warnschild-Vorrichtung ist vorgesehen, dass das Basispaneel mit einer Mehrzahl von Aussparungen versehen ist, wobei die Leuchtelemente im Bereich der Unterfläche einer Oberplatte des Basispaneels jeweils unterhalb einer der betreffenden Aussparungen angeordnet sind, um in leuchtendem Zustand Licht durch die betreffende Aussparung zu senden. Dadurch sind die Leuchtelemente von äußeren Einwirkungen geschützt angeordnet.

Gemäß einer wichtigen bevorzugten Ausführungsform der erfindungsgemäßen Warnschild-Vorrichtung ist vorgesehen, dass mindestens ein mit dem Basispaneel verbundenes Chassis vorgesehen ist, dessen Oberfläche mindestens teilweise mit Photovoltaik-Elementen zum Erzeugen von elektrischem Strom bei Tageslicht versehen ist und in dessen Innerem eine mit den Photovoltaik-Elementen elektrisch verbundene Stromspeicher-Einrichtung untergebracht ist.

Das mindestens eine Chassis ist vorzugsweise einstückig mit dem Paneel ausgebildet derart, dass Paneel und Chassis eine geschlossene Einheit bilden, so dass die darin angeordneten Elemente vor Feuchtigkeit und Schmutz geschützt sind.

Ein Chassis kann vorzugsweise in zwei Chassisteile aufgeteilt sein, die durch einen Zwischenraum voneinander getrennt sind, wobei die beiden Chassisteile so weit voneinander entfernt angeordnet sind, dass im Bereich des Zwischenraumes eine Befestigungseinrichtung platzierbar ist, um die Einheit aus Basispaneel und Chassis an einem im Boden verankerten Trägermast zu befestigen. Dabei ist das Gesamtgewicht von Stromspeicher-Einrichtung und Steuereinheit vorzugsweise gleichmäßig auf die beiden Chassisteile verteilt, um eine stabile Aufhängung der Warnschild-Vorrichtung am Trägermast sicherzustellen. Eine stabile Aufhängung am Trägermast wird auch dadurch begünstigt, dass die beiden Chassisteile eine mutuell klappsymmetrische Formgebung aufweisen.

Gemäß einer weiteren bevorzugten Ausführungsform der erfindungsgemäßen Warnschild-Vorrichtung ist vorgesehen, dass die beiden Chassisteile im Querschnitt jeweils im Wesentlichen dreieckförmig ausgebildet sind, wobei zumindest eine obere der Außenflächen schräg angeordnet ist derart, dass die Querschnittsfläche eines Chassis-Körpers mit steigendem Abstand von dem Basispaneel abnimmt. Ein Photovoltaik-Elemente enthaltendes Photovoltaik-Paneel ist dabei vorzugsweise im Bereich der mindestens einen schräg angeordneten Außenfläche eines Chassis-Körpers angeordnet. Dadurch ist gewährleistet, dass mindestens immer eine der Außenflächen der beiden Chassisteile einer möglichen direkten Einstrahlung von Sonnenlicht ausgesetzt ist.

Das Basispaneel zur Aufnahme einer grafischen Gestaltung kann beispielsweise gemäß der genormten Vorgabe eines dreieckigen Warnschildes für Straßenbauarbeiten ausgelegt sein, wobei die Leuchtelemente im Bereich eines betreffenden roten Dreiecks angeordnet sind.

Gemäß einem anderen Beispiel kann das Basispaneel zur Aufnahme einer grafischen Gestaltung gemäß der genormten Vorgabe eines runden Warnschildes zur Geschwindigkeitsbegrenzung ausgelegt sein, wobei die Leuchtelemente im Bereich eines betreffenden roten Ringes als auch im Bereich einer eine Höchstgeschwindigkeit vorgebenden Zahl angeordnet sind.

Gemäß einer weiteren bevorzugten Ausführungsform der erfindungsgemäßen Warnschild-Vorrichtung ist vorgesehen, dass eine mit der Sensor-Einrichtung gekoppelte Sendeeinheit vorgesehen ist, die ausgelegt ist, um bei Aussenden eines Aktivierungssignals an die Steuereinheit ein zusätzliches Warnsignal abzugeben. Ein zusätzliches Warnsignal kann dabei von einem die geografische Position der Warnschild-Vorrichtung enthaltenden automatisierten Notruf gebildet sein.

Die geografische Position der Warnschild-Vorrichtung ist dabei vorzugsweise in einer mittels eines herkömmlichen Computers beschreibbaren elektronischen Speicher-Einrichtung gespeichert.

Des Weiteren ist die Sendeeinheit vorzugsweise mit einer Speichereinheit zum Speichern vorherbestimmter Nachrichten und mit einer Speichereinheit zum Speichern von Telefonnummern vorherbestimmter Teilnehmer verbunden und ausgelegt, um in dem GSM Standard einen die geografische Position enthaltenden automatisierten Notruf an eine oder mehr der gespeicherten Telefonnummern abzugeben. In der Speichereinheit sind deshalb vorzugsweise die Telefonnummern 112 der allgemeinen Feuerwehr, regionaler Notdienste und/oder lokaler Unfallambulanzen gespeichert.

Gemäß einer weiteren bevorzugten Ausführungsform der erfindungsgemäßen Warnschild-Vorrichtung ist vorgesehen, dass in vorherbestimmtem Abstand zur Warnschild-Vorrichtung im Bereich einer Hauptfahrbahn eine Warneinrichtung für andere Verkehrsteilnehmer platziert ist, wobei ein zusätzliches Warnsignal von einem von der Warneinrichtung abgegebenen optischen Warn-Signal gebildet ist. Das optische Warn-Signal kann dabei beispielsweise von einem mittels Leuchtdioden erzeugten Schriftzug "Achtung Falschfahrer" gebildet sein.

Die Sendeeinheit ist zusammen mit der Sensor-Einrichtung und der Steuereinheit vorzugsweise in einem gemeinsamen Gehäuse untergebracht.

Die erfindungsgemäße Warnschild-Vorrichtung wird im Folgenden anhand einer bevorzugten Ausführungsform erläutert, die in den Figuren der Zeichnung dargestellt ist. Darin zeigen:
- Fig.1: eine erste bevorzugte Ausführungsform der erfindungsgemäßen Warnschild-Vorrichtung in einer Ansicht von vorne;
- Fig.2: die in Figur 1 dargestellte bevorzugte Ausführungsform der erfindungsgemäßen Warnschild-Vorrichtung in einer Ansicht von oben.

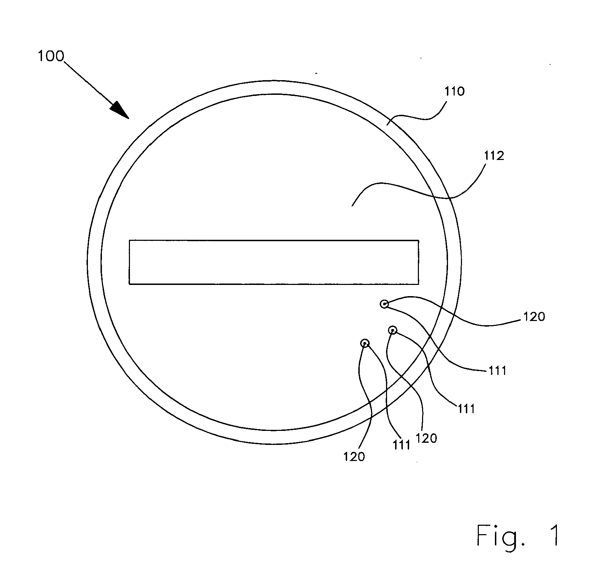

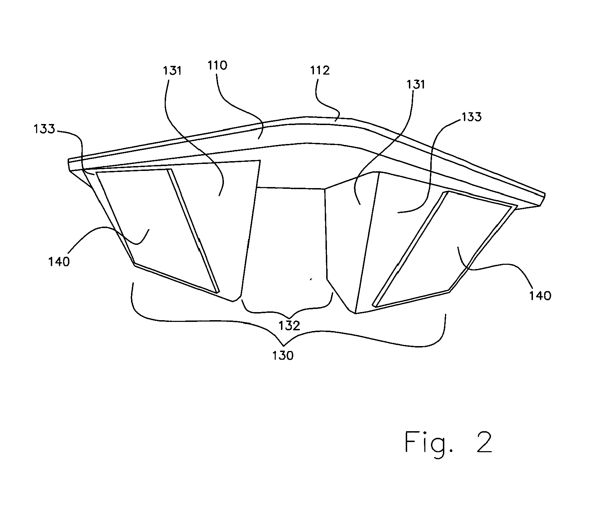

Die in den Figuren 1 und 2 dargestellte erfindungsgemäße Warnschild-Vorrichtung 100 enthält ein Basispaneel 110, dessen Oberfläche zur Aufnahme einer grafischen Gestaltung gemäß einer genormten Vorgabe der STVO dimensioniert ist, wobei im Bereich eines Teils der grafischen Gestaltung der Oberfläche des Basispaneels 110 Leuchtelemente 120 vorgesehen sind.

Die Warnschild-Vorrichtung 100 enthält des Weiteren ein mit dem Basispaneel 110 verbundenes Chassis 130, dessen Oberfläche teilweise mit Photovoltaik-Elementen 140 zum Erzeugen von elektrischem Strom bei Tageslicht versehen ist. Im Inneren des Chassis 130 sind eine mit den Photovoltaik-Elementen 140 elektrisch verbundene Stromspeicher-Einrichtung sowie eine Steuereinheit zum Steuern sowohl eines Einschaltvorgangs als auch eines Ausschaltvorgangs der mit der Stromspeicher-Einrichtung zeitweise elektrisch verbindbaren von Leuchtdioden gebildeten Leuchtelemente 120 untergebracht.

Eine mit der Steuereinheit gekoppelte nicht dargestellte Sensor-Einrichtung ist vorgesehen, um ein sich der Sensor-Einrichtung auf einer Fahrbahn näherndes Kraftfahrzeug zu detektieren. Bei Detektion eines sich der Sensor-Einrichtung nähernden Kraftfahrzeuges sendet diese ein Aktivierungssignal an die Steuereinheit, um einen Einschaltvorgang der Leuchtelemente auszulösen.

Die Sensor-Einrichtung enthält einen in Richtung der Fahrbahn ausgerichteten Sender elektromagnetischer Wellen im Frequenzbereich von Metall reflektierenden Radar-Strahlen sowie einen Empfänger für von einem Kraftfahrzeug reflektierte Strahlung, wobei ein Empfang charakteristischer reflektierter Strahlung die Detektion eines sich der Sensor-Einrichtung nähernden Kraftfahrzeuges signalisiert und ein Aktivierungssignal der Steuereinheit auslöst.

Die Leuchtelemente 120 sind geeignet, um Licht mit den Farben rot und weiß auszusenden, die im Wesentlichen der Farbgebung der betreffenden Bereiche der grafischen Gestaltung der Oberfläche des Basispaneels 110 entsprechen.

Das Basispaneel 110 ist mit einer Mehrzahl von Aussparungen 111 versehen, wobei ein jeweiliges Leuchtelement 120 im Bereich der Unterfläche einer Oberplatte 112 des Basispaneels 110 jeweils unterhalb einer betreffenden Aussparung 111 angeordnet ist, um in leuchtendem Zustand Licht durch die betreffende Aussparung 111 zu senden. Die Aussparungen sowie die darin befindlichen Leuchtelemente sind in der Zeichnung an beispielhaften Stellen schematisiert und stark vergrößert dargestellt.

Das Chassis 130 ist in zwei Chassisteile 131 aufgeteilt, die durch einen Zwischenraum 132 voneinander getrennt sind, wobei die beiden Chassisteile (131) so weit voneinander entfernt angeordnet sind, dass im Bereich des Zwischenraumes eine Befestigungseinrichtung platzierbar ist, um die Einheit aus Basispaneel (110) und Chassis (130) an einem im Boden verankerten Trägermast zu befestigen.

Beide Chassisteile 131 sind dabei einstückig mit dem Paneel 110 ausgebildet derart, dass das Paneel 110 und die Chassisteile 131 eine geschlossene Einheit bilden.

Das Gesamtgewicht von Stromspeicher-Einrichtung und Steuereinheit ist gleichmäßig auf die beiden Chassisteile 131 verteilt, um eine stabile Befestigung der Warnschild-Vorrichtung 100 an einem betreffenden Trägermast sicherzustellen. Die beiden Chassisteile 131 weisen dabei eine mutuell klappsymmetrische Formgebung auf.

Die beiden Chassisteile 131 sind im Querschnitt jeweils im Wesentlichen dreieckförmig ausgebildet, wobei eine obere der Außenflächen 133 schräg angeordnet ist derart, dass die Querschnittsfläche eines Chassis-Körpers 131 mit steigendem Abstand von dem Basispaneel 110 abnimmt. Ein Photovoltaik-Elemente 140 enthaltendes Photovoltaik-Paneel ist im Bereich der schräg angeordneten Außenfläche 133 eines Chassis-Körpers 131 angeordnet.

Die Steuereinrichtung enthält eine Zeitgeber-Einrichtung, die einstellbar ist, um zu Beginn eines vorgebbaren, sich innerhalb von 24 Stunden wiederholenden Zeitfensters einen Einschaltvorgang der Leuchtelemente 120 auszulösen und um bei Ende des Zeitfensters einen Ausschaltvorgang der Leuchtelemente 120 auszuführen.

Das Basispaneel 110 ist zur Aufnahme einer grafischen Gestaltung gemäß der genormten Vorgabe eines dreieckigen Warnschildes für Straßenbauarbeiten ausgelegt, wobei die Leuchtelemente 120 im Bereich eines betreffenden roten Dreiecks angeordnet sind.

Die Warnschild-Vorrichtung 100 enthält des Weiteren eine mit der Sensor-Einrichtung gekoppelte Sendeeinheit, die ausgelegt ist, um bei Aussenden eines Aktivierungssignals an die Steuereinheit ein zusätzliches Warnsignal abzugeben.

Ein zusätzliches Warnsignal ist dabei von einem die geografische Position der Warnschild-Vorrichtung enthaltenden automatisierten Notruf gebildet, wobei die geografische Position der Warnschild-Vorrichtung in einer mittels eines herkömmlichen Computers beschreibbaren elektronischen Speicher-Einrichtung gespeichert ist.

Die Sendeeinheit ist mit einer Speichereinheit zum Speichern vorherbestimmter Nachrichten und mit einer Speichereinheit zum Speichern von Telefonnummern vorherbestimmter Teilnehmer verbunden und ausgelegt, um in dem GSM Standard einen die geografische Position enthaltenden automatisierten Notruf an eine oder mehr der gespeicherten Telefonnummern abzugeben. So ist in der Speichereinheit die Telefonnummern 112 der allgemeinen Feuerwehr, regionaler Notdienste und/oder lokaler Unfallambulanzen gespeichert.

In vorherbestimmtem Abstand zur Warnschild-Vorrichtung ist im Bereich einer Hauptfahrbahn des Weiteren eine Warneinrichtung anderer Verkehrsteilnehmer platziert, wobei ein zusätzliches Warnsignal von einem von der Warneinrichtung abgegebenen optischen Warn-Signal gebildet ist. Das optische Warn-Signal ist dabei von einem mittels Leuchtdioden erzeugten Schriftzug "Achtung Falschfahrer" gebildet.

Die Sendeeinheit, die Sensor-Einrichtung und die Steuereinheit sind in einem gemeinsamen Gehäuse in der von dem Basispaneel 110 und dem Chassis 130 gebildeten geschlossenen Einheit untergebracht.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Warnschild-Vorrichtung (100) mit einem Basispaneel (110), dessen Oberfläche zur Aufnahme einer grafischen Gestaltung gemäß einer genormten Vorgabe der STVO dimensioniert ist, wobei im Bereich zumindest eines Teils der grafischen Gestaltung der Oberfläche des Basispaneels (110) Leuchtelemente (120) vorgesehen sind, und in dessen Innerem eine Steuereinheit zum Steuern sowohl eines Einschaltvorgangs als auch eines Ausschaltvorgangs der mit einer Stromquelle zeitweise elektrisch verbindbaren Leuchtelemente (120) untergebracht ist, **dadurch gekennzeichnet, dass** eine mit der Steuereinheit gekoppelte Sensor-Einrichtung zum Detektieren eines sich der Sensor-Einrichtung auf einer Fahrbahn nähernden Kraftfahrzeuges vorgesehen ist, die bei Detektieren eines sich der Sensor-Einrichtung nähernden Kraftfahrzeuges ein Aktivierungssignal an die Steuereinheit sendet, um einen Einschaltvorgang der Leuchtelemente (120) auszulösen.

2. Vorrichtung nach Anspruch 1, **dadurch gekennzeichnet, dass** die Sensor-Einrichtung einen in Richtung der Fahrbahn ausgerichteten Sender elektromagnetischer Wellen im Frequenzbereich von Metall reflektierenden Radar-Strahlen sowie einen Empfänger für von einem Kraftfahrzeug reflektierte Strahlung enthält, wobei ein Empfang charakteristischer reflektierter Strahlung die Detektion eines sich der Sensor-Einrichtung nähernden Kraftfahrzeuges signalisiert und ein Aktivierungssignal der Steuereinheit auslöst.

3. Vorrichtung nach Anspruch 1, **dadurch gekennzeichnet, dass** die Sensor-Einrichtung zwei unterhalb der Oberfläche der Fahrbahn angeordnete Induktionsschleifen enthält, wobei jede Schleife bei Überfahrt eines Kraftfahrzeuges einen elektrischen Impuls abgibt und zwei durch jeweils eine Schleife ausgelöste, in vorherbestimmter Reihenfolge auftretende Impulse die Detektion eines sich der Sensor-Einrichtung nähernden Kraftfahrzeuges signalisieren und ein Aktivierungssignal der Steuereinheit auslösen.

4. Vorrichtung nach einem der vorhergehenden Ansprüche, **dadurch gekennzeichnet, dass** die Leuchtelemente (120) von Leuchtdioden gebildet sind.

5. Vorrichtung nach einem der vorhergehenden Ansprüche, **dadurch gekennzeichnet, dass** die Leuchtelemente (120) Licht mit einer Farbe aussenden, die im Wesentlichen der Farbgebung der betreffenden Bereiche der grafischen Gestaltung der Oberfläche des Basispaneels (110) entspricht, wobei diese Gestaltung in Form und Farbe als Einfahrt-Verbotsschild ausgelegt ist.

6. Vorrichtung nach einem der vorhergehenden Ansprüche, **dadurch gekennzeichnet, dass** das Basispaneel (110) mit einer Mehrzahl von Aussparungen (111) versehen ist und die Leuchtelemente (120) im Bereich der Unterfläche einer Oberplatte (112) des Basispaneels (110) jeweils unterhalb einer Aussparung (111) angeordnet sind, um in leuchtendem Zustand Licht durch die betreffende Aussparung (111) zu senden.

7. Vorrichtung nach einem der vorhergehenden Ansprüche, **dadurch gekennzeichnet, dass** mindestens ein mit dem Basispaneel (110) verbundenes Chassis (130) vorgesehen ist, dessen Oberfläche mindestens teilweise mit Photovoltaik-Elementen (140) zum Erzeugen von elektrischem Strom bei Tageslicht versehen ist und in dessen Innerem eine mit den Photovoltaik-Elementen (140) elektrisch verbundene Stromspeicher-Einrichtung untergebracht ist.

8. Vorrichtung nach Anspruch 7, **dadurch gekennzeichnet, dass** das mindestens eine Chassis (130) einstückig mit dem Basispaneel (110) ausgebildet ist derart, dass Basispaneel (110) und Chassis (130) eine geschlossene Einheit bilden.

9. Vorrichtung nach einem der Ansprüche 7 oder 8, **dadurch gekennzeichnet, dass** ein Chassis (130) in zwei Chassisteile (131) aufgeteilt ist, die durch einen Zwischenraum (132) voneinander getrennt sind, wobei die beiden Chassisteile (131) so weit voneinander entfernt angeordnet sind, dass im Bereich des Zwischenraumes eine Befestigungseinrichtung platzierbar ist, um die Einheit aus Basispaneel (110) und Chassis (130) an einem im Boden verankerten Trägermast zu befestigen.

10. Vorrichtung nach Anspruch 9, **dadurch gekennzeichnet, dass** das Gesamtgewicht von Stromspeicher-Einrichtung und Steuereinheit gleichmäßig auf die beiden Chassisteile (131) verteilt ist, um eine stabile Aufhängung der Warnschild-Vorrichtung (100) am Trägermast sicherzustellen.

11. Vorrichtung nach den Ansprüchen 9 und 10, **dadurch gekennzeichnet, dass** die beiden Chassisteile (131) eine mutuell klappsymmetrische Formgebung aufweisen.

12. Vorrichtung nach den Ansprüchen 9 bis 11, **dadurch gekennzeichnet, dass** die beiden Chassisteile (131) im Querschnitt jeweils im Wesentlichen dreieckförmig ausgebildet sind, wobei zumindest eine obere Außenfläche (133) der Außenflächen schräg angeordnet ist derart, dass die Querschnittsfläche eines Chassis-Körpers (131) mit steigendem Abstand von dem Basispaneel (110) abnimmt.

13. Vorrichtung nach Anspruch 12, **dadurch gekennzeichnet, dass** ein Photovoltaik-Elemente (140) enthaltendes Photovoltaik-Paneel im Bereich der mindestens einen schräg angeordneten Außenfläche (133) eines Chassis-Körpers (131) angeordnet ist.

14. Vorrichtung nach einem der vorhergehenden Ansprüche, **dadurch gekennzeichnet, dass** eine mit der Sensor-Einrichtung gekoppelte Sendeeinheit vorgesehen ist, die ausgelegt ist, um bei Aussenden eines Aktivierungssignals an die Steuereinheit ein zusätzliches Warnsignal abzugeben.

15. Vorrichtung nach Anspruch 14, **dadurch gekennzeichnet, dass** ein zusätzliches Warnsignal von einem die geografische Position der Warnschild-Vorrichtung enthaltenden automatisierten Notruf gebildet ist.

16. Vorrichtung nach Anspruch 15, **dadurch gekennzeichnet, dass** die geografische Position der Warnschild-Vorrichtung in einer mittels eines herkömmlichen Computers beschreibbaren elektronischen Speicher-Einrichtung gespeichert ist.

17. Vorrichtung nach Anspruch 16, **dadurch gekennzeichnet, dass** die Sendeeinheit mit einer Speichereinheit zum Speichern vorherbestimmter Nachrichten und mit einer Speichereinheit zum Speichern von Telefonnummern vorherbestimmter Teilnehmer verbunden ist und ausgelegt ist, um in dem GSM Standard einen die geografische Position enthaltenden automatisierten Notruf an eine oder mehr der gespeicherten Telefonnummern abzugeben.

18. Vorrichtung nach Anspruch 17, **dadurch gekennzeichnet, dass** in der Speichereinheit die Telefonnummern 112 der allgemeinen Feuerwehr, regionaler Notdienste und/oder lokaler Unfallambulanzen gespeichert sind.

19. Vorrichtung nach einem der Ansprüche 14 bis 18, **dadurch gekennzeichnet, dass** in vorherbestimmtem Abstand zur Warnschild-Vorrichtung im Bereich einer Hauptfahrbahn eine Warneinrichtung für andere Verkehrsteilnehmer platziert ist, wobei ein zusätzliches Warnsignal von einem von der Warneinrichtung abgegebenen optischen Warn-Signal gebildet ist.

20. Vorrichtung nach Anspruch 19, **dadurch gekennzeichnet, dass** das optische Warn-Signal von einem mittels Leuchtdioden erzeugten Schriftzug "Achtung Falschfahrer" gebildet ist.

21. Vorrichtung nach einem Ansprüche 14 bis 18, **dadurch gekennzeichnet, dass** die Sendeeinheit zusammen mit der Sensor-Einrichtung und der Steuereinheit in einem gemeinsamen Gehäuse untergebracht ist.
